# EUROPÄISCHE PATENTSCHRIFT

(11) **EP 3 390 018 B1**
(45) Veröffentlichungstag und Bekanntmachung des Hinweises auf die Patenterteilung: **09.06.2021**
(21) Anmeldenummer: 16810371.1
(22) Anmeldetag: 14.12.2016
(51) Int. Cl.: B29C 70/20, B29B 11/16

(54) **VORRICHTUNG MIT MEHREREN VERBINDEEINRICHTUNGEN ZUR HERSTELLUNG VON HALBZEUGBAHNEN UND VERFAHREN ZUR HERSTELLUNG DIESER HALBZEUGBAHNEN**
DEVICE COMPRISING A PLURALITY OF CONNECTING DEVICES FOR PRODUCING SEMI-FINISHED PRODUCT WEBS, AND METHOD FOR PRODUCING SUCH SEMI-FINISHED PRODUCT WEBS
DISPOSITIF POURVU DE PLUSIEURS UNITÉS DE JONCTION POUR LA FABRICATION DE BANDES DE PRODUITS SEMI-FINIS ET PROCÉDÉ DE FABRICATION DESDITES BANDES DE PRODUITS SEMI-FINIS

(30) Priorität: 17.12.2015 EP 15200659; 17.12.2015 EP 15200643; 22.02.2016 EP 16156688
(43) Veröffentlichungstag der Anmeldung: 24.10.2018
(73) Patentinhaber: Covestro Intellectual Property GmbH & Co. KG, 51373 Leverkusen (DE)
(72) Erfinder: KNAUPP, Matthias, 40239 Düsseldorf (DE)
(74) Vertreter: Levpat
(86) Internationale Anmeldenummer: PCT/EP2016/080924
(87) Internationale Veröffentlichungsnummer: WO 2017/102807

(56) Entgegenhaltungen:
- DE-A1-102012 111 761
- US-A1- 2002 062 908
- US-A1- 2009 068 428

## Beschreibung

Gegenstand der vorliegenden Erfindung sind eine Vorrichtung mit mehreren Verbindeeinrichtungen zur semi-kontinuierlichen Herstellung von Halbzeugbahnen aufgebaut aus unidirektional endlosfaserverstärkten Bahnteilstücken sowie ein Verfahren zur Herstellung dieser Halbzeugbahnen, wobei die Fasern in den fertigen Halbzeugbahnen in einem Winkel x mit einem Betrag ungleich 0° bis einschließlich 90° zur längsten Achse der jeweiligen fertigen Halbzeugbahnen ausgerichtet sind.

Nachfolgend wird eine fertige Halbzeugbahn auch "x°-Tape" genannt.

Tapes, bei denen die Fasern in der Halbzeugbahn in einem Winkel x gleich 0° zur längsten Achse der Halbzeugbahn ausgerichtet sind, werden nachfolgend kurz "0°-Tape" genannt. Eine Verwendung dieser 0°-Tapes ist die als Vorprodukt zur Herstellung von x°-Tapes.

Der Ausdruck "Tape" wird verwendet, wenn sowohl 0°-Tapes als auch x°-Tapes gemeint sind. Die langen Seiten der Tapes verlaufen parallel zueinander.

Unter semi-kontinuierlicher Herstellung wird im Sinne der vorliegenden Erfindung ein Herstellverfahren verstanden, das sowohl Verfahrensschritte aufweist, die kontinuierlich ablaufen oder ausgeführt werden, als auch solche, die diskontinuierlich ablaufen oder ausgeführt werden.

Das auf der erfindungsgemäßen Vorrichtung erfindungsgemäß hergestellte x°-Tape zeichnet sich unter anderem dadurch aus, dass die Fasern nicht wie bei 0°-Tapes in 0°-Richtung zur längsten Achse des Tapes liegen, sondern in einem Winkel x zur Vorschubrichtung ausgerichtet sind, wobei der Winkel x ungleich 0° ist. Die längste Achse eines Tapes wird auch Laufrichtung genannt. Unter "endlosfaserverstärkt" wird verstanden, dass die Länge der verstärkenden Faser im Wesentlichen der Abmessung des zu verstärkenden Tapes in der Ausrichtung der Faser entspricht. Unter "unidirektional" im Zusammenhang mit "Faser" wird verstanden, dass die Fasern im Tape in nur einer Richtung ausgerichtet sind.

Der Einsatz von faserverstärkten Materialien hat auf Grund ihrer ausgezeichneten spezifischen Eigenschaften in den letzten Dekaden stetig zugenommen. Insbesondere bei beschleunigten Strukturen werden faserverstärkte Materialien eingesetzt, um ohne Verluste bei der Festigkeit und Steifigkeit des Materials eine Gewichtsreduktion zu ermöglichen und so den Energieverbrauch zu minimieren.

Bei einem faserverstärkten Material, auch Faserverbundwerkstoff oder kurz Verbundwerkstoff genannt, handelt es um einen mindestens zweiphasigen Werkstoff, der aus einem Matrixmaterial besteht, in dem Fasern im Wesentlichen vollständig eingebettet und ummantelt sind. Die Matrix hat eine formgebende Funktion, soll die Fasern vor äußeren Einflüssen schützen und ist notwendig, um Kräfte zwischen den Fasern zu übertragen sowie äußere Lasten einzuleiten. Die Fasern tragen maßgeblich zur mechanischen Leistungsfähigkeit des Werkstoffs bei, wobei in der Industrie häufig Glas-, Carbon-, Polymer-, Basalt-, oder Naturfasern zum Einsatz kommen. Als Matrixmaterial werden - abhängig vom Einsatzzweck - im Allgemeinen duroplastische oder thermoplastische Polymere eingesetzt, vereinzelt auch Elastomere.

Duroplastische Polymere sind bereits in zahlreichen Industrien seit langem etabliert. Ein entscheidender Nachteil ist jedoch die lange Aushärtungszeit, die bei der Verarbeitung zu Bauteilen zu entsprechend langen Zykluszeiten führt. Dies macht duroplastbasierte Verbundwerkstoffe vor allem für Industrieanwendungen mit hohen Stückzahlen unattraktiv. Thermoplastbasierte Verbundwerkstoffe hingegen werden häufig, soweit sie als bereits vollkonsolidierte Halbzeuge vorliegen, z.B. als endlosfaserverstärkte Platten oder Profile, bei der Weiterverarbeitung lediglich aufgeheizt, umgeformt und abgekühlt, was heutzutage in Zykluszeiten deutlich unter einer Minute zu realisieren ist. Darüber hinaus lässt sich die Verarbeitung mit weiteren Prozessschritten wie z.B. dem Hinterspritzen mit Thermoplasten kombinieren, wodurch ein sehr hoher Grad an Automatisierung und Funktionsintegration erreicht werden kann.

Als Verstärkungsmaterial werden im Wesentlichen textile Halbzeuge wie Gewebe, mehrlagige Gelege oder Non-wovens (z.B. Vliese, Wirrfasermatten etc.) verwendet. Diese Formen der Faserverstärkung zeichnen sich dadurch aus, dass bereits im textilen Halbzeug die Ausrichtung der Faser - und somit der Kraftpfade im späteren Bauteil - festgelegt ist. Dies ermöglicht zwar die direkte Herstellung eines multidirektional verstärkten Verbundwerkstoffes, hat aber Nachteile hinsichtlich der Flexibilität des Lagenaufbaus, der mechanischen Eigenschaften und der Wirtschaftlichkeit. Bei thermoplastbasierten Systemen werden diese textilen Halbzeuge üblicher Weise unter Druck und Temperatur mit Polymer imprägniert und anschließend als ausgehärtete Platte zugeschnitten und weiterverarbeitet.

Neben diesen bereits etablierten Systemen auf Basis von textilen Halbzeugen gewinnen thermoplastbasierte Tapes zunehmend an Bedeutung. Diese bieten Vorteile in der Wirtschaftlichkeit, da der Prozessschritt der textilen Halbzeugherstellung eingespart werden kann. Diese thermoplastbasierten Tapes eignen sich zur Herstellung von mehrlagigen Aufbauten, insbesondere auch zur Herstellung von multidirektionalen Aufbauten.

Ein Verfahren und eine Vorrichtung zur Herstellung eines unidirektional endlosfaserverstärkten Tapes sind beispielsweise in EP 2 631 049 A1, deren Offenbarung hiermit vollumfänglich in die Beschreibung der vorliegenden Erfindung mit einbezogen wird, beschrieben. Auch in der noch nicht veröffentlichten europäischen Patentanmeldung mit dem Aktenzeichen EP15200643.3, deren Offenbarung hiermit ebenfalls vollumfänglich in die Beschreibung der vorliegenden Erfindung mit einbezogen wird, sind ein Verfahren und eine Vorrichtung zur Herstellung eines unidirektional endlosfaserverstärkten Tapes beschrieben.

Bei dem in EP 2 631 049 A1 offenbarten Verfahren werden zur Herstellung eines x°-Tapes von einer Vorratsbahn, die eine Hauptrichtung, eine Kunststoffmatrix und eine Vielzahl von unidirektional gerichtet festgelegten Fasern aufweist, die einen Winkel gleich 0° mit der Laufrichtung einschließen, Segmente abgetrennt, diese Segmente nebeneinander angeordnet, so dass ihre parallel zur Laufrichtung verlaufenden Längskanten parallel zueinander und benachbart sind und den vorbestimmten Winkel mit der Längsrichtung einschließen, und benachbarte Segmente im Bereich ihrer Längskanten miteinander verbunden. Die Vorratsbahn entspricht damit einem 0°-Tape. Im x°-Tape sind die Fasern dann in einem Winkel x ungleich 0° zur Laufrichtung des x°-Tapes angeordnet.

Die in EP 2 631 049 A1 offenbarte Vorrichtung umfasst eine Spenderanordnung zum Ausgeben von Segmenten der Vorratsbahn, die eine Hauptrichtung, eine Kunststoffmatrix und eine Vielzahl von unidirektional gerichtet festgelegten Fasern aufweisen, die einen Winkel gleich 0° mit der Hauptrichtung einschließen, eine Ausrichteinrichtung zum Anordnen der Segmente nebeneinander, so dass ihre parallel zur Hauptrichtung verlaufenden Längskanten parallel zueinander und benachbart sind und einen vorbestimmten Winkel (a) mit der Längsrichtung einschließen, und eine Verbindungseinrichtung zum Verbinden der benachbarten Segmente im Bereich ihrer Längskanten.

Die Spenderanordnung gemäß EP 2 631 049 A1 ist - wie bei Maschinen für diese Verwendung üblich - in aller Regel eine Vorschubeinrichtung für die Vorratsbahn, von der die Segmente abgeschnitten und zu einer Verbindeeinrichtung weitertransportiert werden. Auch können die Segmente aus einem Magazin oder Speicher geliefert werden. Die Verbindeeinrichtung verbindet dann die Segmente miteinander zum x°-Tape, vorzugsweise mittels Verkleben oder Verschweißen.

Nachteilig an dieser Verfahrensweise ist, dass das sowohl das Verkleben als auch das Verschweißen um ein mehrfaches länger dauern als das Abschneiden und Liefern der Segmente. Das führt dazu, dass das Verbinden der Segmente der geschwindigkeitsbestimmende Schritt bei der Herstellung der x°-Tapes ist. Somit hemmt das Verbinden der Segmente die schnelle Produktion von x°-Tapes.

US2002062908A1 offenbart dazu als Lösung eine Vorrichtung, mit einer Schneideinrichtung, einer Handlingeinrichtung und zwei Verbindeeinrichtungen, wobei die Schneideinrichtung der Handlingeinrichtung vorgeschaltet ist, die Handlingeinrichtung den zwei Verbindeeinrichtungen vorgeschaltet ist und die mindestens zwei Verbindeeinrichtungen parallel zueinander geschaltet sind. Jedoch ist die in der US2002062908A1 offenbarte Lösung nur auf die Herstellung von Gürtelreifen beschränkt. Gürtelreifen sind verhältnismäßig dicke Gebilde und weisen als Matrix Gummi auf, jedoch keinen Thermoplasten.

DE102012111761A1 offenbart eine Vorrichtung und ein Verfahren zur Herstellung eine zwei- oder mehrlagigen bahnförmigen Halbzeugmaterials mit wenigstens einer unidirektional faserverstärkten Lage. Jedoch bietet auch DE102012111761A1 keine Lösung an, wie das Verbinden der Segmente die schnelle Produktion von x°-Tapes weniger hemmen soll.

Aufgabe der vorliegenden Erfindung ist es, die Nachteile des Standes der Technik zu überwinden. Insbesondere Aufgabe der vorliegenden Erfindung ist es, eine Vorrichtung und ein Verfahren zur Verfügung zu stellen, mit denen es möglich ist, die Herstellung von x°-Tapes aus von der Vorratsbahn abgeschnittenen und gelieferten Elemente zu beschleunigen.

Auch soll die Vorrichtung platzsparend angeordnet werden können.

Darüber hinaus soll es mit der erfindungsgemäßen Vorrichtung möglich sein, ein aus Bahnteilstücken aufgebautes x°-Tape herzustellen, bei dem die Fasern einen Winkel x mit einem Betrag ungleich 0° bis einschließlich 90° zur Laufrichtung des x°-Tapes aufweisen.

Gelöst wird die Aufgabe durch die Gegenstände der unabhängigen Ansprüche. Vorteilhafte Ausführungsformen finden sich in den Unteransprüchen.

Insbesondere wird die Aufgabe gelöst durch eine Vorrichtung zur semi-kontinuierlichen Herstellung eines x°-Tapes aus einem 0°-Tape, wobei das Matrixmaterial des 0°-Tapes zu mindestens 50 Gew.-% aus Polycarbonat besteht, und wobei das 0°-Tape eine Dicke von 100 bis 350 µm hat, und wobei das x°-Tape eine Halbzeugbahn aufgebaut aus unidirektional endlosfaserverstärkten Bahnteilstücken ist, wobei die Fasern in dieser Halbzeugbahn in einem Winkel x mit einem Betrag ungleich 0° bis einschließlich 90° zur Laufrichtung des x°-Tapes ausgerichtet sind, umfassend folgende Hauptkomponenten:
(A) eine Schneideinrichtung;
(B) eine Handlingeinrichtung;
(C₁; C₂; ... Cₙ) mindestens zwei Verbindeeinrichtungen,
wobei in Vorschubrichtung die Schneideinrichtung (A) der Handlingeinrichtung (B) vorgeschaltet ist, die Handlingeinrichtung (B) den mindestens zwei Verbindeeinrichtungen (C₁; C₂; ... Cₙ) vorgeschaltet und zum abwechselnden Verteilen der Bahnteilstücke auf die mindestens zwei Verbindereinrichtungen (C₁; C₂; ... Cₙ) geeignet ist und die mindestens zwei Verbindeeinrichtungen (C₁; C₂; ... Cₙ) parallel zueinander geschaltet sind,.

Der Index n bezeichnet eine ganze positive Zahl, die größer oder gleich 3 ist.

Dabei bedeutet "parallel zueinander geschaltet" nicht, dass die mindestens zwei Verbindeeinrichtungen (C₁; C₂; ... Cₙ) räumlich parallel zueinander angeordnet sein müssen. Im Sinne der vorliegenden Erfindung bedeutet "parallel zueinander geschaltet" nur, dass die mindestens zwei Verbindungseinrichtungen (C₁; C₂; ... Cₙ) in solcher Weise zueinander angeordnet sind, dass sie in gleicher Weise von der Handlingeinrichtung (B) mit Bahnteilstücken beliefert werden können. Jedoch können die mindestens zwei Verbindeeinrichtungen (C₁; C₂; ... Cₙ) auch räumlich parallel zueinander angeordnet sein.

Der Schneideinrichtung (A) vorgeschaltet sind folgende Zusatzkomponenten:
(D) eine Abwickeleinrichtung;
(E) eine erste Speichereinheit (Akkumulator)
(F) eine Zuführeinrichtung.

Den Verbindeeinrichtungen (C₁; C₂; Cₙ) jeweils nachgeschaltet sind folgende Zusatzkomponenten:
(G) eine Abzugseinrichtung
(H) eine zweite Speichereinheit (Akkumulator);
(J) eine Aufwickeleinrichtung.

Bevorzugt weist die erfindungsgemäße Vorrichtung genau zwei oder genau drei Verbindungseinrichtungen (C₁; C₂; C₃) auf, besonders bevorzugt genau zwei Verbindungseinrichtungen (C₁; C₂).

Damit ergibt sich für zwei Verbindungseinrichtungen in Vorschubrichtung folgende Reihenfolge der Haupt- und Zusatzkomponenten:
Abwickeleinrichtung (D) - Speichereinheit (E) - Zuführeinrichtung (F) - Schneideinrichtung (A) - Handlingeinrichtung (B) - Verbindeeinrichtung (C₁) (bzw. Verbindeeinrichtung (C₂)) - Abzugseinrichtung (G₁) (bzw. Abzugseinrichtung (G₂)) - zweite Speichereinheit (H₁₎ (bzw. zweite Speichereinheit (H₂)) - Aufwickeleinrichtung (J₁) (bzw. Aufwickeleinrichtung (J₂)).

Für drei Verbindungseinrichtungen in Vorschubrichtung ergibt sich folgende Reihenfolge der Haupt- und Zusatzkomponenten:
Abwickeleinrichtung (D) - Speichereinheit (E) - Zuführeinrichtung (F) - Schneideinrichtung (A) - Handlingeinrichtung (B) - Verbindeeinrichtung (C₁) (bzw. Verbindeeinrichtung (C₂) bzw. Verbindeeinrichtung (C₃)) - Abzugseinrichtung (G₁) (bzw. Abzugseinrichtung (G₂) bzw. Abzugseinrichtung (G₃)) - zweite Speichereinheit (H₁) (bzw. zweite Speichereinheit (H₂) bzw. zweite Speichereinheit (H₃)) - Aufwickeleinrichtung (J₁) (bzw. Aufwickeleinrichtung (J₂) bzw. Aufwickeleinrichtung (J₃)).

Haupt- und Zusatzkomponenten bilden die Gesamtvorrichtung.

Soweit nicht auf eine bestimmte Verbindeeinrichtung (C₁; C₂; ... Cₙ) Bezug genommen wird, wird nachfolgend die Verbindeeinrichtung (C) ohne Index verwendet, da die mindestens zwei Verbindeeinrichtungen sich hinsichtlich ihres Aufbaus und ihrer Eigenschaften bezüglich der Erfindung nicht unterscheiden. Entsprechendes gilt für die anderen Bezugszeichen.

Die Abwickeleinrichtung (D) kann beispielsweise eine Rolle umfassen, auf der das 0°-Tape aufgerollt ist. Andere Ausführungen der Abwickeleinrichtung (D) sind jedoch auch möglich. Das 0°-Tape hat in der Regel in Laufrichtung eine Länge von 100 bis zu 3000 m, eine Breite von 60 bis 2100 mm, bevorzugt von 500 bis 1000 mm, besonders bevorzugt von 600 bis 800 mm.

Erfindungsgemäß hat das 0°-Tape - wie bereits beschrieben - eine Dicke von 100 bis 350 µm, bevorzugt von 120 bis 200 µm. Jedoch kann auf der erfindungsgemäßen Vorrichtung auch ein anders dimensioniertes 0°-Tape verarbeitet werden.

Wie bereits dargestellt, sind solche 0°-Tapes und deren Herstellung beispielsweise aus EP 2 631 049 A1 bekannt. Andere unidirektional endlosfaserverstärkte Halbzeugbahnen, bei denen die Fasern in einem Winkel von 0° in Laufrichtung dieser Halbzeugbahn ausgerichtet sind, und langen Kanten der Halbzeugbahn parallel zueinander verlaufen, können jedoch ebenfalls eingesetzt werden.

Bevorzugt sind dabei 0°-Tapes, bei denen das Matrixmaterial zu mindestens 50 Gew.-%, bevorzugt mindestens 70 Gew.-%, besonders bevorzugt zu mindestens 90 Gew.-%, ganz besonders bevorzugt mindestens 95 Gew.-%, insbesondere zu mindestens 97 Gew.-%, aus einem oder mehreren Thermoplasten besteht. Dabei ist der Thermoplast bevorzugt ausgewählt aus ein oder mehreren der Reihe umfassend Polycarbonat, Polyamid, Polyethylen, Polypropylen, Polyphenylensulfon, Polyetherimid, einem Polyetherketon wie Polyetheretherketon Polyetherketonketon, Polyetheretheretherketon, Polyetheretherketonketon, Poly(etherketon-etherketonketon) und thermoplastisches Polyurethan. Besonders bevorzugt ist der Thermoplast Polycarbonat.

Als ein auf Polycarbonat basierender Thermoplast wird im Rahmen der vorliegenden Erfindung ein Thermoplast verstanden, der mindestens 50 Gew.-%, vorzugsweise mindestens 60 Gew.-%, bevorzugt mindestens 70 Gew.-%, insbesondere mindestens 80 Gew.-%, besonders bevorzugt mindestens 90 Gew.-%, ganz besonders bevorzugt mindestens 95 Gew.-%, insbesondere mindestens 97 Gew.-% Polycarbonat enthält. Anders ausgedrückt kann ein auf Polycarbonat basierender Thermoplast im Rahmen der vorliegenden Erfindung höchstens zu 50 Gew.-%, vorzugsweise höchstens 40 Gew.-%, bevorzugt höchstens 30 Gew.-%, insbesondere höchstens 20 Gew.-%, besonders bevorzugt höchstens 10 Gew.-%, ganz besonders bevorzugt höchstens 5 Gew.-%, insbesondere höchstens 3 Gew.-% einen oder mehrere von Polycarbonat verschiedene Bestandteile als Blendpartner enthalten.

Bevorzugt besteht der auf Polycarbonat basierende Thermoplast im Wesentlichen, insbesondere zu 100 Gew.-% aus Polycarbonat.

Wenn hier von Polycarbonat die Rede ist, so sind damit auch Mischungen verschiedener Polycarbonate gemeint. Ferner wird Polycarbonat hier als Oberbegriff verwendet und umfasst damit sowohl Homopolycarbonate als auch Copolycarbonate. Die Polycarbonate können ferner in bekannter Weise linear oder verzweigt sein.

Bevorzugt besteht der auf Polycarbonat basierende Kunststoff zu 70 Gew.-%, 80 Gew.-%, 90 Gew.-% oder im Wesentlichen, insbesondere zu 100 Gew.-%, aus einem linearen Polycarbonat.

Die Herstellung der Polycarbonate kann in bekannter Weise aus Diphenolen, Kohlensäurederivaten, gegebenenfalls Kettenabbrechern und Verzweigern erfolgen. Einzelheiten der Herstellung von Polycarbonaten sind dem Fachmann seit mindestens etwa 40 Jahren gut bekannt. Beispielhaft sei hier auf Schnell, Chemistry and Physics of Polycarbonates, Polymer Reviews, Volume 9, Interscience Publishers, New York, London, Sydney 1964, auf D. Freitag, U. Grigo, P.R. Müller, H. Nouvertné, BAYER AG, Polycarbonates in Encyclopedia of Polymer Science and Engineering, Volume 11, Second Edition, 1988, Seiten 648-718 und schließlich auf U. Grigo, K. Kirchner und P.R. Müller Polycarbonate in BeckerBraun, Kunststoff-Handbuch, Band 31, Polycarbonate, Polyacetale, Polyester, Celluloseester, Carl Hanser Verlag München, Wien 1992, Seiten 117-299 verwiesen.

Die Herstellung aromatischer Polycarbonate erfolgt z.B. durch Umsetzung von Diphenolen mit Kohlensäurehalogeniden, vorzugsweise Phosgen, und oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern. Ebenso ist eine Herstellung über ein Schmelzepolymerisationsverfahren durch Umsetzung von Diphenolen mit beispielsweise Diphenylcarbonat möglich. Für die Herstellung der Polycarbonate geeignete Diphenole sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α-α'-Bis-(hydroxyphenyl)-diisopropylbenzole, Phtalimidine abgeleitet von Isatin- oder Phenolphthaleinderivaten sowie deren kernalkylierte, kernarylierte und kernhalogenierte Verbindungen.

Vorzugsweise werden bei den Diphenolen auf der Basis von Phthalimiden, wie beispielsweise 2-Aralkyl-3,3'-Bis-(4-hydroxyphenyl)-phthalimide oder 2-Aryl-3,3'-Bis-(4-hydroxyphenyl)-phthalimide wie 2-Phenyl-3,3'-Bis-(4-hydroxyphenyl)-phthalimid, 2-Alkyl-3,3'-Bis-(4-hydroxyphenyl)-phthalimide, wie 2-Butyl-3,3'-Bis-(4-hydroxyphenyl)-phthalimide, 2-Propyl-3,3'-Bis-(4-hydroxyphenyl)-phthalimide, 2-Ethyl-3,3'-Bis-(4-hydroxyphenyl)-phthalimide oder 2-Methyl-3,3'-Bis-(4-hydroxyphenyl)-phthalimide sowie Diphenolen auf der Basis von am Stickstoff substituierten Isatinen wie 3,3-Bis(4-hydroxyphenyl)-1-phenyl-1H-indol-2-on oder 2,2-Bis(4-hydroxyphenyl)-1-phenyl-1H-indol-3-on eingesetzt.

Bevorzugte Diphenole sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1,1-Bis-(4-hydroxyphenyl)-3,3,5-trimethylcyclohexan.

Besonders bevorzugte Diphenole sind 2,2-Bis-(4-hydroxyphenyl)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan und Dimethyl-Bisphenol A.

Diese und weitere geeignete Diphenole sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie H. Schnell, Chemistry and Physics of Polycarbonates, Interscience Publishers, New York 1964 sowie in JP-A 620391986, JP-A 620401986 und JP-A 1055501986 beschrieben.

Im Fall der Homopolycarbonate wird nur ein Diphenol eingesetzt, im Fall der Copolycarbonate werden mehrere Diphenole eingesetzt.

Geeignete Kohlensäurederivate sind beispielsweise Phosgen oder Diphenylcarbonat. Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Cumylphenol, sowie deren Mischungen.

Bevorzugte Kettenabbrecher sind die Phenole, welche ein- oder mehrfach mit C1- bis C30-Alkylresten, linear oder verzweigt, bevorzugt unsubstituiert, oder mit tert-Butyl substituiert sind.

Besonders bevorzugte Kettenabbrecher sind Phenol, Cumylphenol undoder p-tert-Butylphenol. Die Menge an einzusetzendem Kettenabbrecher beträgt bevorzugt 0,1 bis 5 Mol-%, bezogen auf Mole an jeweils eingesetzten Diphenolen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4-dihydroxytriphenyl)-methyl)-benzol und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 3,00 Mol-%, bezogen auf Mole an jeweils eingesetzten Diphenolen. Die Verzweiger können entweder mit den Diphenolen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Diphenolen eingesetzt.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Des Weiteren können auch Copolycarbonate Verwendung finden. Zur Herstellung dieser Copolycarbonate können 1 Gew.-% bis 25 Gew.-%, vorzugsweise 2,5 Gew.-% bis 25 Gew.-%, besonders bevorzugt 2,5 Gew.-% bis 10 Gew.-%, bezogen auf die Gesamtmenge an einzusetzenden Diphenolen, Polydiorganosiloxane mit Hydroxyaryloxy-Endgruppen eingesetzt werden. Diese sind bekannt (US 3 419 634, US-PS 3 189 662, EP 0 122 535, US 5 227 449) und nach literaturbekannten Verfahren herstellbar. Ebenfalls geeignet sind Polydiorganosiloxanhaltige Copolycarbonate; die Herstellung der Polydiorganosiloxanhaltiger Copolycarbonate ist beispielsweise in der DE-A 3 334 782 beschrieben.

Die Polycarbonate können alleine oder als Mischung von Polycarbonaten vorliegen. Es ist auch möglich das Polycarbonat oder die Mischung von Polycarbonaten gemeinsam mit einem oder mehreren von Polycarbonat verschiedenen Kunststoffen als Blendpartner einzusetzen.

Als Blendpartner lassen sich Polyamide, Polyester, insbesondere Polybutylenterephthalat und Polyethylenterephthalat, Polylactid, Polyether, thermoplastisches Polyurethan, Polyacetal, Fluorpolymer, insbesondere Polyvinylidenfluorid, Polyethersulfone, Polyolefin, insbesondere Polyethylen und Polypropylen, Polyimid, Polyacrylat, insbesondere Poly(methyl)methacrylat, Polyphenylenoxid, Polyphenylensulfid, Polyetherketon, Polyaryletherketon, Styrolpolymerisate, insbesondere Polystyrol, Styrolcopolymere, insbesondere Styrolacrylnitrilcopolymer, Acrylnitrilbutadienstyrolblockcopolymere und Polyvinylchlorid einsetzen.

Zusätzlich können optional bezogen auf das Gewicht des Thermoplasten bis zu 50,0 Gew.-%, bevorzugt 0,2 bis 40 Gew.-%, besonders bevorzugt 0,10 bis 30,0 Gew.-% sonstige übliche Additive enthalten sein.

Diese Gruppe umfasst Flammschutzmittel, Antitropfmittel, Thermostabilisatoren, Entformungsmittel, Antioxidantien, UV-Absorber, IR-Absorber, Antistatika, optische Aufheller, Lichtstreumittel, Farbmittel wie Pigmente, auch anorganischen Pigmente, Ruß und/oder Farbstoffe, und anorganische Füllstoffe in den für Polycarbonat üblichen Mengen. Diese Additive können einzeln oder auch im Gemisch zugesetzt werden.

Solche Additive, wie sie üblicherweise bei Polycarbonaten zugesetzt werden, sind beispielsweise in EP-A 0 839 623, WO-A 96/15102, EP-A 0 500 496 oder "Plastics Additives Handbook", Hans Zweifel, 5th Edition 2000, Hanser Verlag, München beschrieben.

Erfindungsgemäß geeignete Polyamide sind ebenfalls bekannt oder nach literaturbekannten Verfahren herstellbar.

Erfindungsgemäß geeignete Polyamide sind bekannte Homopolyamide, Copolyamide und Mischungen dieser Polyamide. Es können dies teilkristalline und/oder amorphe Polyamide sein. Als teilkristalline Polyamide sind Polyamid-6, Polyamid-6,6, Mischungen und entsprechende Copolymerisate aus diesen Komponenten geeignet. Weiterhin kommen teilkristalline Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylendiamin und/oder Hexamethylendiamin und/oder 2,2,4-Trimethylhexamethylendiamin und/oder 2,4,4-Trimethylhexamethylendiamin und/oder Isophorondiamin besteht und deren Zusammensetzung prinzipiell bekannt ist.

Außerdem sind Polyamide zu nennen, die ganz oder teilweise aus Lactamen mit 7 bis 12 Kohlenstoffatomen im Ring, gegebenenfalls unter Mitverwendung einer oder mehrerer der oben genannten Ausgangskomponenten, hergestellt werden.

Besonders bevorzugte teilkristalline Polyamide sind Polyamid-6 und Polyamid-6,6 und ihre Mischungen. Als amorphe Polyamide können bekannte Produkte eingesetzt werden. Sie werden erhalten durch Polykondensation von Diaminen wie Ethylendiamin, Hexamethylendiamin, Decamethylendiamin, 2,2,4- und/oder 2,4,4-Trimethyl-hexamethylendiamin, m- und/oder p-Xylylendiamin, Bis-(4-aminocyclohexyl)-methan, Bis-(4-aminocyclohexyl)-propan, 3,3'-Dimethyl-4,4'-diamino-dicyclohexyl-methan, 3-Aminomethyl-3,5,5-trimethylcyclohexylamin, 2,5- und/oder 2,6-Bis-(aminomethyl)-norbornan und/oder 1,4-Diaminomethylcyclohexan mit Dicarbonsäuren wie Oxalsäure, Adipinsäure, Azelainsäure, Decandicarbonsäure, Heptadecandicarbonsäure, 2,2,4-und/oder 2,4,4-Trimethyladipinsäure, Isophthalsäure und Terephthalsäure.

Auch Copolymere, die durch Polykondensation mehrerer Monomere erhalten wer-den, sind geeignet, ferner Copolymere, die unter Zusatz von Aminocarbonsäuren wie e-Aminocapronsäure, w-Aminoundecansäure oder w-Aminolaurinsäure oder ihren Lactamen, hergestellt werden.

Besonders geeignete amorphe Polyamide sind die Polyamide hergestellt aus Isoph-thalsäure, Hexamethylendiamin und weiteren Diaminen wie 4,4-Diaminodicyclo-hexylmethan, Isophorondiamin, 2,2,4- und/oder 2,4,4-Trimethylhexa-methylendi-amin, 2,5- und/oder 2,6-Bis-(aminomethyl)-norbornen; oder aus Isophthalsäure, 4,4'-Diamino-dicyclohexylmethan und ε-Caprolactam; oder aus Isophthalsäure, 3,3'-Di-methyl-4,4'-diamino-dicyclohexylmethan und Laurinlactam; oder aus Terephthalsäure und dem Isomerengemisch aus 2,2,4- und/oder 2,4,4-Trimethylhexamethylendiamin.

Anstelle des reinen 4,4'-Diaminodicyclohexylmethans können auch Gemische der Stellungsisomeren Diamindicyclohexalmethane eingesetzt werden, die sich zusammensetzen aus
70 bis 99 mol-% des 4,4'-Diamino-Isomeren,
1 bis 30 mol-% des 2,4'-Diamino-Isomeren und
0 bis 2 mol-% des 2,2'-Diamino-Isomeren,
gegebenenfalls entsprechend höher kondensierten Diaminen, die durch Hydrierung von Diaminodiphenylmethan technischer Qualität erhalten werden. Die Isophthalsäure kann bis zu 30 % durch Terephthalsäure ersetzt sein.

Die Polyamide weisen vorzugsweise eine relative Viskosität (gemessen an einer 1 gew.-%igen Lösung in m-Kresol bei 25°C) von 2,0 bis 5,0, besonders bevorzugt von 2,5 bis 4,0 auf.

Erfindungsgemäß geeignete thermoplastische Polyurethane sind ebenfalls bekannt oder nach literaturbekannten Verfahren herstellbar.

Eine Übersicht über die Herstellung, Eigenschaften und Anwendungen von thermoplastischem Polyurethanen (TPU) ist z.B. im Kunststoff Handbuch [G. Becker, D. Braun], Band 7 "Polyurethane", München, Wien, Carl Hanser Verlag, 1983, gegeben.

TPU werden zumeist aus linearen Polyolen (Makrodiolen), wie Polyester-, Polyether- oder Polycarbonatdiolen, organischen Diisocyanaten und kurzkettigen, zumeist difunktionellen Alkoholen (Kettenverlängerern) aufgebaut. Sie können kontinuierlich oder diskontinuierlich hergestellt werden. Die bekanntesten Herstellverfahren sind das Bandverfahren (GB-A 1 057 018) und das Extruderverfahren (DE-A 19 64 834).

Die eingesetzten thermoplastischen Polyurethane sind Reaktionsprodukte aus
I) organischen Diisocyanaten
II) Polyolen
III) Kettenverlängerern.

Als Diisocyanate (I) können aromatische, aliphatische, araliphatische, heterocyclische und cycloaliphatische Diisocyanate oder Gemische dieser Diisocyanate verwendet werden (vgl. HOUBEN-WEYL "Methoden der organischen Chemie", Band E20 "Makromolekulare Stoffe", Georg Thieme Verlag, Stuttgart, New York 1987, S. 1587-1593 oder Justus Liebigs Annalen der Chemie, 562, Seiten 75 bis 136).

Im Einzelnen seien beispielhaft genannt: aliphatische Diisocyanate, wie Hexamethylendi-isocyanat, cycloaliphatische Diisocyanate, wie Isophorondiisocyanat, 1,4-Cyclohexan-diisocyanat, 1-Methyl-2,4-cyclohexan-diisocyanat und 1-Methyl-2,6-cyclohexan-diisocyanat sowie die entsprechenden Isomerengemische, 4,4'-Dicyclohexylmethan-diisocyanat, 2,4'-Dicyclohexylmethan-diisocyanat und 2,2'-Dicyclohexylmethan-diisocyanat sowie die entspre-chenden Isomerengemische, aromatische Diisocyanate, wie 2,4-Toluylendiisocyanat, Gemische aus 2,4-Toluylendiisocyanat und 2,6-Toluylendiisocyanat, 4,4'-Diphenylmethan-diisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4'-Diphenylmethandiisocyanate und 2,4'-Diphenylmethandiiso-cyanate, 4,4'-Diisocyanatodiphenyl-ethan-(1,2) und 1,5-Naphthylendiisocyanat. Vorzugsweise verwendet werden 1,6-Hexamethylendiisocyanat, Isophorondiisocyanat, Dicyclohexyl-methandiisocyanat, Diphenylmethandiisocyanat-Isomerengemische mit einem 4,4'-Diphenyl-methandiisocyanatgehalt von >96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 Gew.-% (berechnet auf die Gesamtmenge an Diisocyanat) eines Polyisocyanates verwendet werden, beispielsweise Triphenylmethan-4,4',4"-triisocyanat oder Polyphenyl-poly-methylen-polyisocyanaten.

Zerewitinoff-aktive Polyole (II) sind solche mit im Mittel mindestens 1,8 bis höchstens 3,0 zerewitinoff-aktiven Wasserstoffatomen und einem zahlenmittleren Molekulargewicht M̅ ₙ von 500 bis 10000 g/mol, vorzugsweise 500 bis 6000 g/mol.

Eingeschlossen sind neben Aminogruppen, Thiolgruppen oder Carboxylgruppen aufweisenden Verbindungen insbesondere zwei bis drei, bevorzugt zwei Hydroxylgruppen aufweisende Verbindungen, speziell solche mit zahlenmittleren Molekulargewichten M̅ ₙ von 500 bis 10000 g/mol, besonders bevorzugt solche mit einem zahlenmittleren Molekulargewicht M̅ ₙ von 500 bis 6000 g/mol; z.B. Hydroxylgruppen aufweisende Polyester, Polyether, Polycarbonate und Polyesteramide oder Gemische aus diesen.

Geeignete Polyether-Diole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2-Butylenoxid und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanolamin und Diole wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherole sind ferner die hydroxylgruppenhaltigen Poly-merisationsprodukte des Tetrahydrofurans. Es können auch trifunktionelle Polyether in Anteilen von 0 bis 30 Gew.-% bezogen auf die bifunktionellen Polyether eingesetzt werden, jedoch höchstens in solcher Menge, dass ein noch thermoplastisch verarbeitbares Produkt entsteht. Die im Wesentlichen linearen Polyether-Diole besitzen vorzugsweise zahlenmittlere Molekulargewichte M̅ ₙ von 500 bis 10000 g/mol, besonders bevorzugt 500 bis 6000 g/mol. Sie können sowohl einzeln als auch in Form von Mischungen untereinander zur Anwendung kommen.

Geeignete Polyester-Diole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren wie Bernsteinsäure, Glutarsäure, Adipinsäure, Korksäure, Azelainsäure und Sebacinsäure, oder aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyester-Diole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, z.B. Ethylenglykol, Diethylenglykol, 1,4-Butandiol, 1,5-Pentandiol, 1,6 Hexandiol, 1,10-Decandiol, 2,2-Dimethyl-1,3-propandiol, 1,3-Propandiol oder Di-propylenglykol. Je nach den gewünschten Eigenschaften können die mehrwertigen Alkohole allein oder in Mischung untereinander verwendet werden. Geeignet sind ferner Ester der Koh-lensäure mit den genannten Diolen, insbesondere solchen mit 4 bis 6 Kohlenstoffatomen, wie 1,4-Butandiol oder 1,6-Hexandiol, Kondensationsprodukte von ω-Hydroxycarbonsäuren wie ω-Hydroxycapronsäure oder Polymerisationsprodukte von Lactonen, z.B. gegebenenfalls substituierten ω-Caprolactonen. Als Polyester-Diole vorzugsweise verwendet werden Ethandiol-polyadipate, 1,4-Butandiolpolyadipate, Ethandiol-1,4-butandiolpolyadipate, 1,6-Hexandiol-neopentylglykolpolyadipate, 1,6-Hexandiol-1,4-butandiolpolyadipate und Polycaprolactone. Die Polyester-Diole besitzen zahlenmittleren Molekulargewichte M̅ ₙ von 500 bis 10000 g/mol, besonders bevorzugt 600 bis 6000 g/mol und können einzeln oder in Form von Mischungen untereinander zur Anwendung kommen.

Zerewitinoff-aktive Polyole (III) sind sogenannte Kettenverlängerungsmittel und besitzen im Mittel 1,8 bis 3,0 zerewitinoff-aktive Wasserstoffatome und haben ein zahlenmittleres Molekulargewicht M̅ ₙ von 60 bis 500 g/mol. Hierunter versteht man neben Aminogruppen, Thiolgruppen oder Carboxylgruppen aufweisenden Verbindungen solche mit zwei bis drei, bevorzugt zwei Hydroxylgruppen.

Als Kettenverlängerungsmittel werden Diole oder Diamine mit einem Molekulargewicht von 60 bis 495 g/mol eingesetzt, vorzugsweise aliphatische Diole mit 2 bis 14 Kohlenstoffatomen eingesetzt, wie z.B. Ethandiol, 1,2-Propandiol, 1,3-Propandiol, 1,4-Butandiol, 2,3-Butandiol, 1,5-Pentandiol, 1,6-Hexandiol, Diethylenglykol und Dipropylenglykol. Geeignet sind jedoch auch Diester der Terephthalsäure mit Glykolen mit 2 bis 4 Kohlenstoffatomen, z.B. Terephthalsäure-bisethylenglykol oder Terephthalsäure-bis-1,4-butandiol, Hydroxy-alkylenether des Hydrochinons, z.B. 1,4-Di(β-hydroxyethyl)-hydrochinon, ethoxylierte Bisphenole, z.B. 1,4-Di(β-hydroxyethyl)-bisphenol A, (cyclo)aliphatische Diamine, wie Iso-phorondiamin, Ethylendiamin, 1,2-Propylendiamin, 1,3-Propylendiamin, N Methyl-propylen-1,3-diamin, N,N'-Dimethylethylendiamin und aromatische Diamine, wie 2,4-Toluylendiamin, 2,6-Toluylendiamin, 3,5-Diethyl-2,4 toluylendiamin oder 3,5 Diethyl-2,6-toluylendiamin oder primäre mono-, di-, tri- oder tetraalkylsubstituierte 4,4'-Diaminodiphenylmethane. Besonders bevorzugt werden als Kettenverlängerer Ethandiol, 1,4-Butandiol, 1,6-Hexandiol, 1,4-Di(β-hydroxyethyl)-hydrochinon oder 1,4 Di(β-hydroxyethyl)-bisphenol A verwendet. Es können auch Gemische der oben genannten Kettenverlängerer eingesetzt werden. Daneben können auch kleinere Mengen an Triolen zugesetzt werden.

Gegenüber Isocyanaten monofunktionelle Verbindungen können in Anteilen bis zu 2 Gew.-%, bezogen auf thermoplastisches Polyurethan, als sogenannte Kettenabbrecher oder Entformungshilfen eingesetzt werden. Geeignet sind z.B. Monoamine wie Butyl- und Di-butylamin, Octylamin, Stearylamin, N-Methylstearylamin, Pyrrolidin, Piperidin oder Cyclohexylamin, Monoalkohole wie Butanol, 2-Ethylhexanol, Octanol, Dodecanol, Stearylalkohol, die verschiedenen Amylalkohole, Cyclohexanol und Ethylen-glykolmonomethylether.

Die relativen Mengen der Verbindungen (II) und (III) werden bevorzugt so gewählt, dass das Verhältnis der Summe der Isocyanatgruppen in (I) zu der Summe der zerewitinoffaktiven Wasserstoffatome in (II) und (III) 0,85 : 1 bis 1,2 : 1 beträgt, bevorzugt 0,95 : 1 bis 1,1 : 1.

Die erfindungsgemäß eingesetzten, thermoplastischen Polyurethanelastomere (TPU) können als Hilfs- und Zusatzstoffe bis zu maximal 20 Gew.-%, bezogen auf die Gesamtmenge an TPU, der üblichen Hilfs- und Zusatzstoffe enthalten. Typische Hilfs- und Zusatzstoffe sind Katalysatoren, Pigmente, Farbstoffe, Flammschutzmittel, Stabilisatoren gegen Alterungs- und Witterungseinflüsse, Weichmacher, Gleit- und Entformungsmittel, fungistatisch und bakteriostatisch wirkende Substanzen sowie Füllstoffe und deren Mischungen.

Geeignete Katalysatoren sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylamino-ethoxy)ethanol, Diazabicyclo[2,2,2]octan und ähnliche sowie insbesondere organische Metallverbindungen wie Titansäureester, Eisenverbindungen oder Zinnverbindungen wie Zinndiacetat, Zinndioctoat, Zinndilaurat oder die Zinndialkyl-salze aliphatischer Carbonsäuren wie Dibutylzinndiacetat oder Dibutylzinndilaurat oder ähnliche. Bevorzugte Katalysatoren sind organische Metallverbindungen, insbesondere Titansäureester, Eisen- und Zinnverbindungen. Die Gesamtmenge an Katalysatoren in den TPU beträgt in der Regel etwa 0 bis 5 Gew.-%, bevorzugt 0 bis 2 Gew.-%, bezogen auf die Gesamtmenge an TPU.

Beispiele für weitere Zusatzstoffe sind Gleitmittel, wie Fettsäureester, deren Metallseifen, Fettsäureamide, Fettsäureesteramide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische und/oder organische Füllstoffe und Verstärkungsmittel. Verstärkungsmittel sind insbesondere faserartige Verstärkungsstoffe wie z.B. anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R. Gächter u. H. Müller (Hanser Verlag München 1990) oder der DE-A 29 01 774 zu entnehmen.

Weitere Zusätze, die in das TPU eingearbeitet werden können, sind Thermoplaste, beispielsweise Polycarbonate und Acrylnitril/Butadien/Styrol-Terpolymere, insbesondere ABS. Auch andere Elastomere wie Kautschuk, Ethylen/Vinylacetatcopolymere, Styrol/Butadiencopolymere sowie andere TPU können verwendet werden.

Weiterhin zur Einarbeitung geeignet sind handelsübliche Weichmacher wie Phosphate, Phthalate, Adipate, Sebacate und Alkylsulfonsäureester.

Erfindungsgemäß geeignetes Polyethylen ist ebenfalls bekannt oder nach literaturbekannten Verfahren herstellbar. Bei dem Polyethylen kann es sich sowohl um PE-HD (HDPE), PE-LD (LDPE), PE-LLD (LLDPE), PE-HMW, als auch um PE-UHMW handeln.

Auch das erfindungsgemäß geeignete Polypropylen, Polyphenylensulfon, Polyetherimid, und Polyetherketon ist ebenfalls bekannt oder nach literaturbekannten Verfahren herstellbar.

Allgemein kann es sinnvoll sein, dem Thermoplasten, der für die Matrix verwendet wird, Thermostabilisatoren und Fließverbesserer zuzusetzen, sofern diese nicht das Molekulargewicht des Thermoplasts verringern und/oder die Vikat-Temperatur erniedrigen.

Als Material für die Fasern kommen sowohl Naturfasern, z.B. faserförmige Minerale oder pflanzliche Fasern, als auch künstlich hergestellte Fasern, z.B. anorganische Synthesefasern oder organische Synthesefasern, in Betracht. Bevorzugt sind Glas-, Carbon-, oder Polymerfasern, wiederum bevorzugt Glas- oder Carbonfasern.

Ganz besonders bevorzugt werden Glasfasern mit einem E-Modul von größer 70 GPa, bevorzugt größer 80 GPa, besonders bevorzugt größer 90 GPa oder Carbonfasern mit einem E-Modul von größer 240 GPa, bevorzugt größer 245 GPa, besonders bevorzugt von 250 GPa oder mehr eingesetzt. Insbesondere sind Carbonfasern mit diesen vorgenannten E-Modulen bevorzugt. Solche Carbonfasern sind beispielsweise unter der Bezeichnung Pyrofil von der Firma Mitsubishi Rayon CO., LtD. im Handel erhältlich.

Die Fasern sind in aller Regel mit einer sogenannten Schlichte beschichtet. Wird ein Thermoplast als Matrixmaterial verwendet, so enthalten geeignete Systeme für Schlichten häufig einen Duroplasten, ein Silan, ein Epoxidharz oder ein Polyurethan. Es ist aber auch möglich, dass die Fasern oder ein Teil der Fasern keine Schlichte aufweisen.

Von dieser Abwickeleinrichtung (D) wird das 0°-Tape kontinuierlich abgewickelt und in Vorschubrichtung der Speichereinrichtung zugeführt. Die erste Speichereinheit (E) führt dann das 0°-Tape über die Zuführeinrichtung (F) der Schneideinrichtung (A) zu. Die erste Speichereinheit (E) kann beispielsweise mehrere translatorisch in Schwerkraftrichtung beweglich gelagerte Rollen aufweisen oder in anderer sinnvoller Weise ausgestaltet sein. Die Zuführeinrichtung (F) kann beispielsweise als Abrolleinrichtung, Förderband oder einer Laufrollenstrecke ausgeführt sein. Die Zuführeinrichtung (F) führt das 0°-Tape derart zu, dass die Laufrichtung des 0°-Tapes und die Vorschubrichtung der erfindungsgemäßen Vorrichtung übereinstimmen.

Das Schneiden des 0°-Tapes ist ein diskontinuierlicher Vorgang. Daher wird der kontinuierliche Vorschub des 0°-Tapes in bestimmten Intervallen unterbrochen, um den Schneidvorgang so durchführen zu können, dass der Schnitt einer geraden Linie mit dem Winkel x zur Laufrichtung des 0°-Tapes entspricht. Die Schneideinrichtung (A) kann beispielsweise als Rollmesser, Schlagschere, Tafelschere, Guillotine, Hebelschere, Laser, Wasserstrahlschneideinrichtung, Fräse, Kappsäge, Bandsäge, Trennscheibe oder in einer anderen geeigneten Ausführungsform ausgebildet sein. Mit der Schneideinrichtung (A) werden vom 0°-Tape in einem vorbestimmten Winkel x zur Vorschubrichtung des 0°-Tapes Bahnteilstücke abgeschnitten, wobei der Vorschubrichtung der Winkel 0° zukommt. Der Betrag des Winkels x ist größer 0° und beträgt bis einschließlich 90°, wobei der Winkel x bevorzugt einen Betrag von 30°, 33°, 45°, 60°, 75° oder 90° hat; besonders bevorzugt hat der Winkel x einen Betrag von 90°. Wird der Winkel x im Uhrzeigersinn zur Vorschubrichtung bestimmt, so erhält der Wert des Winkels x ein negatives Vorzeichen, wird der Winkel x gegen den Uhrzeigersinn bestimmt, so erhält der Wert des Winkels x ein positives Vorzeichen, das nach allgemeiner Konvention aber nicht dargestellt wird. Dabei wird der Betrag des Winkels x so bestimmt, dass er durch einen möglichst geringen Betrag definiert ist. So entspräche ein Winkel x mit einem Wert von 135° einem Winkel x von mit einem Wert von -45°; es wird dann der Betrag des Winkels x von 45° angegeben; ein Winkel x mit einem Wert von 120° entspräche einem Winkel x mit einem Wert von -60°; es wird dann der Betrag des Winkels x von 60° angegeben.

Die Schneideinrichtung ist bevorzugt so ausgestaltet, dass mit ihr beliebige Winkel zwischen °0 und 90° sowohl mit als auch gegen den Uhrzeigersinn eingestellt werden können.

Den Wechsel vom kontinuierlichen zum diskontinuierlichen Vorschub führt die Zuführeinrichtung (F) durch, wobei die erste Speichereinheit (E) während der Unterbrechung des Vorschubs des 0°-Tapes das von der Abwickeleinrichtung (D) kontinuierlich zugeführte 0°-Tape zwischenspeichert.

Die vom dem 0°-Tape abgeschnittenen Bahnteilstücke werden von der Handlingeinrichtung (B) in einem weiteren diskontinuierlichen Schritt abwechselnd zu jeweils einer der mindestens zwei Verbindeeinrichtungen (C₁; C₂; ... Cₙ) transportiert. In diesem Zusammenhang bedeutet abwechselnd, dass die Handlingeinrichtung (B) eine bestimmte Verbindeeinrichtung (C) der mindestens zwei Verbindeeinrichtungen (C₁; C₂; ... Cₙ) nicht unmittelbar hintereinander mit einem Bahnteilstück beliefert, sondern erst ein Bahnteilstück zu einer anderen Verbindeeinrichtung (C) der Verbindeeinrichtungen (C₁; C₂; ... Cₙ) transportiert. Bevorzugt beliefert die Handlingeinrichtung (B) die mindestens zwei Verbindeeinrichtungen (C₁; C₂; ... Cₙ) in solch einer Abfolge, dass alle der mindestens zwei Verbindeeinrichtungen (C₁; C₂; ... Cₙ) immer zum gleichen Zeitpunkt in der Reihenfolge der mindestens zwei Verbindeeinrichtungen (C₁; C₂; ... Cₙ) mit Bahnteilstücken beliefert werden, und besonders bevorzugt werden alle der der mindestens zwei Verbindeeinrichtungen (C₁; C₂; ... Cₙ) in gleichen zeitlichen Abständen Bahnteilstücken beliefert.

Erfindungsgemäß ist es beispielweise möglich, dass Schneideeinrichtung (A), Handlingeinrichtung (B) und zwei Verbindeeinrichtungen (C₁) und (C₂) in Form eines Y angeordnet sind, wobei die Schneideinrichtung (A) am Fuß des lateinischen Großbuchstabens Y angeordnet wäre, die Handlingeinrichtung (B) am Verzweigungspunkt und die zwei Verbindeeinrichtungen (C₁) und (C₂) an den oberen Enden des Y. Der Einfachheit halber wird diese Anordnung auch Y-Anordnung genannt. Bei der Y-Anordnung kann z.B. die Handlingeinrichtung (B) ein Bahnstück zur Verbindeeinrichtung (C₁) transportieren und dann zur Verbindeeinrichtung (C₂), dann wieder zur Verbindeeinrichtung (C₁), usw.

Erfindungsgemäß ist es beispielweise auch möglich, dass Schneideeinrichtung (A), Handlingeinrichtung (B) und drei Verbindeeinrichtungen (C₁), (C₂) und (C₃) in Form des griechischen Großbuchstabens Ψ (Psi) angeordnet sind, wobei die Schneideinrichtung (A) am Fuß des Ψ angeordnet wäre, die Handlingeinrichtung (B) am Verzweigungspunkt und die drei Verbindeeinrichtungen (C₁), (C₂) und (C₃) an den oberen Enden des Ψ. Der Einfachheit halber wird diese Anordnung auch Psi-Anordnung genannt. Bei der Psi-Anordnung kann z.B. die Handlingeinrichtung (B) ein Bahnstück zur Verbindeeinrichtung (C₁) transportieren, dann zur Verbindeeinrichtung (C₂), dann zur Verbindeeinrichtung (C₃) dann wieder zur Verbindeeinrichtung (C₁), usw.

Erfindungsgemäß ist es beispielweise auch möglich, dass Schneideeinrichtung (A), Handlingeinrichtung (B) und zwei Verbindeeinrichtungen (C₁) und C2) in Form des lateinischen Großbuchstabens E angeordnet sind, wobei die Schneideinrichtung (A) am freien Ende des mittleren Beins des E angeordnet wäre, die Handlingeinrichtung (B) am Verzweigungspunkt in der Mitte und die zwei Verbindeeinrichtungen (C₁) und (C₂) an den freien oberen und unteren äußeren Enden des E. Der Einfachheit halber wird diese Anordnung auch E-Anordnung genannt. Bei der E-Anordnung kann z.B. die Handlingeinrichtung (B) ein Bahnstück zur Verbindeeinrichtung (C₁) transportieren und dann zur Verbindeeinrichtung (C₂), dann wieder zur Verbindeeinrichtung (C₁), usw.

Erfindungsgemäß ist es beispielweise auch möglich, dass Schneideeinrichtung (A), Handlingeinrichtung (B) und drei Verbindeeinrichtungen (C₁), (C₂) und (C₃) in Form des lateinischen Großbuchstabens K angeordnet sind, wobei die Schneideinrichtung (A) am linken unteren Fuß des K angeordnet wäre, die Handlingeinrichtung (B) am Verzweigungspunkt und die drei Verbindeeinrichtungen (Ci), (C₂) und (C₃) an den anderen Enden des K. Der Einfachheit halber wird diese Anordnung auch K -Anordnung genannt. Bei der K-Anordnung kann z.B. die Handlingeinrichtung (B) ein Bahnstück zur Verbindeeinrichtung (C₁) transportieren, dann zur Verbindeeinrichtung (C₂), dann zur Verbindeeinrichtung (C₃) dann wieder zur Verbindeeinrichtung (C₁), usw.

Als Abwandlung der K-Anordnung ist es erfindungsgemäß beispielweise auch möglich, dass Schneideeinrichtung (A), Handlingeinrichtung (B) und drei Verbindeeinrichtungen (C₁), (C₂) und (C₃) in Form des lateinischen Großbuchstabens X angeordnet sind, wobei die Schneideinrichtung (A) an einem beliebigen Fuß des X angeordnet wäre, die Handlingeinrichtung (B) am Verzweigungspunkt und die drei Verbindeeinrichtungen (C₁), (C₂) und (C₃) an den anderen Enden des X. Die Winkel, unter denen die Schneideeinrichtung (A) und die drei Verbindeeinrichtungen (C₁), (C₂) und (C₃) von der Handlingeinrichtung (B) abzweigen, können - unter Berücksichtigung der räumlichen Verhältnisse - beliebig gewählt werden. Der Einfachheit halber wird diese Anordnung auch X-Anordnung genannt. Bei der X-Anordnung kann z.B. die Handlingeinrichtung (B) ein Bahnstück zur Verbindeeinrichtung (C₁) transportieren, dann zur Verbindeeinrichtung (C₂), dann zur Verbindeeinrichtung (C₃) dann wieder zur Verbindeeinrichtung (C₁), usw.

Als Abwandlung der X-Anordnung ist es erfindungsgemäß beispielweise auch möglich, dass Schneideeinrichtung (A), Handlingeinrichtung (B) und vier oder mehr Verbindeeinrichtungen (Ci; C₂; ... Cₙ) in sternförmig angeordnet sind, wobei die Schneideinrichtung (A) an der Spitze eines beliebigen Zackens des Sterns angeordnet wäre, die Handlingeinrichtung (B) am Verzweigungspunkt und die vier oder mehr Verbindeeinrichtungen (C₁; C₂; ... Cₙ) an den anderen Zackenspitzen des Sterns. Die Winkel, unter denen die Schneideeinrichtung (A) und die vier oder mehr Verbindeeinrichtungen (C₁; C₂; ... Cₙ) von der Handlingeinrichtung (B) abzweigen, können - unter Berücksichtigung der räumlichen Verhältnisse - beliebig gewählt werden. Der Einfachheit halber wird diese Anordnung auch Stern-Anordnung genannt. Bei der Stern-Anordnung kann z.B. die Handlingeinrichtung (B) ein Bahnstück zur Verbindeeinrichtung (C1) transportieren, dann zur Verbindeeinrichtung (C2), dann zur Verbindeeinrichtung (C3), usw. bis die Verbindeeinrichtung Cₙ beliefert wurde, dann wieder zur Verbindeeinrichtung (C1), usw.

Natürlich sind erfindungsgemäß auch andere Anordnungen von Schneideeinrichtung (A), Handlingeinrichtung (B) und mindestens zwei Verbindeeinrichtungen (C₁, C₂, ... Cₙ) zueinander möglich.

In welcher der oben beispielhaft genannten oder auch erfindungsgemäß anderen Form die Schneideeinrichtung (A), Handlingeinrichtung (B) und mindestens zwei Verbindeeinrichtungen (C₁, C₂, ... Cₙ) am besten zueinander anzuordnen sind, wird beispielsweise durch den für die Gesamtvorrichtung zur Verfügung stehenden Platz bestimmt oder dadurch, wie viele Verbindeeinrichtungen (C₁, C₂, ... Cₙ) einer Schneideeinrichtung (A) und Handlingeinrichtung (B) zugeordnet werden sollen bzw. können. Letzteres ist vor allem davon abhängig, wie lange der Schritt (1) des Schneidens des 0°-Tapes gegenüber dem Schritt (2) des abwechselnden Verteilens der Bahnteilstücke auf die mindestens zwei Verbindereinrichtungen (C₁; C₂; ... Cₙ) und insbesondere gegenüber dem Schritt (3) des stoffschlüssigen Verbindens der Bahnteilstücke zu x°-Tapes dauert. Von den drei genannten Schritten ist der Schritt (3) des stoffschlüssigen Verbindens der Bahnteilstücke zu x°-Tapes mit Abstand der langsamste; beispielsweise dauert er etwa 8 bis 9 Sekunden bei Verbinden mittels Ultraschall. Der Schritt (1) des Schneidens des 0°-Tapes ist der zweitschnellste; er dauert beispielsweise bei Einsatz eines Rollmessers etwa 4 Sekunden. Der Schritt (2) ist der schnellste der drei genannten Schritte und dauert bei einer geeigneten Handlingeinrichtung (B) wie beispielsweise einem Roboterarm in Verbindung mit einer Traverse nur etwa 3 Sekunden oder weniger. Damit kann die Handlingeinrichtung (B) die Bahnteilstücke schneller ab- und antransportieren als die Schneideeinrichtung (A) diese herstellen und eine einzelne Verbindungseinrichtung (C₁) die Bahnteilstücke weiter verarbeiten kann. Daher kommt es - bildlich gesprochen - nicht vor der Handlingeinrichtung (B) zu einem "Stau" von Bahnteilstücken, sondern hinter der Handlingeinrichtung (B). Wird der Schritt (1) wie oben beispielhaft dargestellt doppelt so schnell wie der Schritt (3) ausgeführt, so ist es erfindungsgemäß vorteilhaft, einer Schneideeinrichtung (A) zwei Verbindeeinrichtungen C₁ und C₂ zuzuordnen. Wird der Schritt (1) wie beispielsweise auch möglich dreimal so schnell wie der Schritt (3) ausgeführt, so ist es erfindungsgemäß vorteilhaft, einer Schneideeinrichtung (A) drei Verbindeeinrichtungen C₁, C₂ und C₃ zuzuordnen. Es ist also erfindungsgemäß vorteilhaft, der Schneideinrichtung (A) so viele Verbindeeinrichtungen (C₁, C₂, Cₙ) zuzuordnen, wie der Quotient der Ausführungsgeschwindigkeit des Schritts (3) dividiert durch die Ausführungsgeschwindigkeit des Schritts (1) ergibt. Ist dieser Quotient eine nicht ganze Zahl, wird der Fachmann auf Grund der sonstigen technischen und wirtschaftlichen Umstände entscheiden, ob er diese Zahl zur nächsthöheren ganzen Zahl aufrundet oder zur nächstniedrigen Zahl abrundet. Er wird dabei beispielsweise in Erwägung ziehen, ob des sinnvoller ist, den Schritt (1) zu verlangsamen, was bei einer Abrundung nötig sein könnte, oder ob er in Kauf nimmt, dass es beim Schritt (3) zu weiteren Verzögerungen kommt, was bei einer Aufrundung der Fall wäre.

Erfindungsgemäß bevorzugt ist die E-Anordnung.

Wie aus den verschiedenen Formen der Anordnung von Schneideeinrichtung (A), Handlingeinrichtung (B) und mindestens zwei Verbindeeinrichtungen (C₁; C₂; ... Cₙ) leicht ersehen werden kann, ändert sich die Vorschubrichtung zumindest eines Teils der Bahnteilstücke durch die Handlingeinrichtung (B) beim Übergang zu den mindestens zwei Verbindeeinrichtungen (C₁; C₂; ... Cₙ), da aus Platzgründen mindestens eine der mindestens zwei Verbindeeinrichtungen nicht mit der Schneideeinrichtung (A) und den dieser vorgelagerten Zusatzkomponenten fluchten kann. Erfindungsgemäß ist es auch möglich, dass keine der mindestens zwei Verbindeeinrichtungen (C₁; C₂; ... Cₙ) mit der Schneideeinrichtung (A) und den dieser vorgelagerten Zusatzkomponenten fluchtet. Es ist also erfindungsgemäß möglich, aber nicht zwingend, dass eine der mindestens zwei Verbindeeinrichtungen (C₁; C₂; ... Cₙ) mit der Schneideeinrichtung (A) und den dieser vorgelagerten Zusatzkomponenten fluchtet. Dies kann beispielsweise bei der K-, bei der Psi- oder bei der X-Anordnung der Fall sein.

Dabei werden die Bahnstücke so in der gleichen Ebene gedreht und in der neuen bzw. unveränderten Vorschubrichtung hintereinander gelegt, dass bei den Bahnteilstücken nun die Seiten gegenüber liegen, die beim 0°-Tape Bereiche der zueinander parallelen Außenseiten waren. Die Bereiche, die beim 0°-Tape innerhalb desselben lagen, bilden nun die zueinander parallelen Außenseiten.

Dabei ist zu beachten, dass die Handlingeinrichtung (B) die Bahnteilstücke in der neuen bzw. unveränderten Vorschubrichtung so dreht, dass nach der Drehung die Bereiche, die im 0°-Tape innerhalb desselben gelegen haben, nun parallel zur Laufrichtung des jeweiligen x°-Tapes liegen, während die die Seiten, die beim 0°-Tape Bereiche der zueinander parallelen Außenseiten waren, nun im mit dem Betrag des Winkels x zur Laufrichtung des jeweiligen x°-Tapes ausgerichtet sind.

Die Handlingeinrichtung (B) kann zum Beispiel als Robotergreifarm -oder -greifhand, Drehteller, drehbare Saugeinrichtung oder in anderer geeigneter Weise ausgestaltet sein. Im Falle der erfindungsgemäß bevorzugten E-Anordnung kann die Handlingeinrichtung (B) mit einer Traverse (K) kombiniert sein, über die die Handlingeinrichtung (B) die vom x°-Tape abgeschnittenen Bahnteilstücke an die zwei Verbindeeinrichtungen C₁ und C₂ liefert. Auch bei der Psi-Anordnung kann die Handlingeinrichtung mit einer Traverse (K) kombiniert sein, über die in diesem Fall die Handlingeinrichtung (B) die vom x°-Tape abgeschnittenen Bahnteilstücke an die drei Verbindeeinrichtungen C₁, C₂ und C₃ liefert.

Der Handlingeinrichtung (B) folgen die mindestens zwei Verbindeeinrichtungen (C₁; C₂; ... Cₙ). In diesen werden in einem weiteren diskontinuierlichen Schritt die Bahnteilstücke stoffschlüssig unter Bildung des x°-Tapes so miteinander verbunden, dass die Seiten, die beim 0°-Tape Bereiche der zueinander parallelen Außenseiten waren, nun innerhalb des x°-Tapes liegen und die zueinander parallelen Außenseiten des x°-Tapes durch Bereiche gebildet werden, die beim 0°-Tape innerhalb desselben lagen. Im x°-Tape weisen die Fasern demnach auch eine Ausrichtung mit dem Betrag des Winkels x zur Laufrichtung des jeweiligen x°-Tapes auf.

Die mindestens zwei Verbindeeinrichtungen (C₁; C₂; ... Cₙ) können als Schweißeinrichtung oder Klebeeinrichtung ausgestaltet sein. Bevorzugt sind sie als Schweißeinrichtung ausgestaltet, wobei der Schweißvorgang beispielsweise mittels Heißbalken, Laser, Heißluft, Infrarotstrahlung oder Ultraschall durchgeführt wird, wobei das Durchführen des Schweißvorgangs mittels Ultraschall bevorzugt ist. Besonders bevorzugt wird der Schweißvorgang wie in der noch nicht veröffentlichten europäischen Patentanmeldung EP15200659.9, deren Offenbarung hiermit ebenfalls vollumfänglich in die Beschreibung der vorliegenden Erfindung mit einbezogen wird, durchgeführt. Die Verbindung wird dabei erfindungsgemäß als Stoßverbindung ausgeführt, so dass es nicht zu einer Überlappung der Bahnteilstücke kommt, d.h. die Bahnteilstücke werden nur an den Flächen miteinander verbunden, die beim 0°-Tape Bereiche der zueinander parallelen Außenseiten waren, Bereiche der Ober- oder Unterseite des 0°-Tapes werden nicht in das Herstellen der Verbindung mit einbezogen.

Erfindungsgemäß bevorzugt sind die mindestens zwei Verbindeeinrichtungen (C₁; C₂; ... Cₙ) gleichartig ausgeführt, also z.B. alle als Schweißvorrichtung oder alle als Klebevorrichtung. Es ist aber auch möglich, die mindestens zwei Verbindeeinrichtungen (C₁; C₂; ... Cₙ) unterschiedlich auszuführen.

Den mindestens zwei Verbindereinrichtungen (C₁; C₂; ... Cₙ) folgen in den jeweiligen Vorschubrichtungen jeweils eine Abzugseinrichtung (G), die das x°-Tape weitertransportiert. Dieser Weitertransport ist auf Grund der diskontinuierlichen Arbeiten der mindestens zwei Verbindereinrichtungen (C₁; C₂; ... Cₙ) und des sich daraus ergebenden diskontinuierlichen Längenwachstums des x°-Tapes zunächst ebenfalls diskontinuierlich. Der jeweiligen Abzugseinrichtung (G) folgt dann jeweils eine zweite Speichereinheit (H), die den diskontinuierlichen Vorschub in einen kontinuierlichen Vorschub umwandelt. Diese jeweils zweite Speichehereinheit (H) kann in gleicher oder anderer Weise wie die erste Speichereinheit (E) ausgestaltet sein, die sich vor der Schneideeinrichtung befindet. Der jeweiligen Speichereinheit folgt jeweils eine Aufwickeleinrichtung (J), die das x°-Tape auf einen Kern wickelt.

Die erfindungsgemäße Vorrichtung ermöglicht es, im Vergleich zu Vorrichtungen, die nur eine Verbindeeinrichtung aufweisen, die Herstellung von x°-Tapes aus von der Vorratsbahn abgeschnittenen und gelieferten Elemente zu beschleunigen.

Auch ist es durch geeignete Auswahl der Anordnung möglich, die Vorrichtung platzsparend anzuordnen. So kann z.B. die Psi-Anordnung dann besonders platzsparend angeordnet werden, wenn die zur Verfügung stehende Fläche in einer Richtung mindestens doppelt so stark ausgedehnt ist als in der anderen, auf der ersten Richtung senkrecht stehenden Richtung. Dem gegenüber kann z.B. die E-Anordnung dann besonders platzsparend angeordnet werden, wenn die zur Verfügung stehende Fläche in einer Richtung weniger als doppelt so stark ausgedehnt ist als in der anderen, auf der ersten Richtung senkrecht stehenden Richtung.

Dadurch wird erreicht, dass gegenüber Anordnungen aus dem Stand der Technik weniger Platz gebraucht wird und leichter mehrere erfindungsgemäße Vorrichtungen z.B. in einer Maschinenhalle untergebracht werden können.

Darüber hinaus ist es mit der erfindungsgemäßen Vorrichtung möglich, ein aus Bahnteilstücken aufgebautes x°-Tape herzustellen, bei dem die Fasern einen Winkel x mit einem Betrag ungleich 0° bis einschließlich 90° zur Laufrichtung des x°-Tapes aufweisen.

Gegenstand der vorliegenden Erfindung ist auch ein Verfahren zur Herstellung von x°-Tapes, in der die Fasern in einem Winkel x mit einem Betrag ungleich 0° bis einschließlich 90° zur Laufrichtung des jeweiligen x°-Tapes ausgerichtet sind. Erfindungsgemäß wird das Verfahren wird auf der oben beschriebenen erfindungsgemäßen Vorrichtung durchgeführt.

Es umfasst folgende Schritte:
(1) Schneiden des 0°-Tapes in Bahnteilstücke mit einer Schneideinrichtung (A);
(2) abwechselndes Verteilen der Bahnteilstücke auf die mindestens zwei Verbindereinrichtungen (C₁; C₂; ... Cₙ);
(3) stoffschlüssiges Verbinden der Bahnteilstücke zu x°-Tapes,
wobei
der Schneideinrichtung (A) so viele Verbindeeinrichtungen (C1, C2, ... Cn) zugeordnet sind, wie der Quotient der Ausführungsgeschwindigkeit des Schritts (3) dividiert durch die Ausführungsgeschwindigkeit des Schritts (1) ergibt
und wobei
das Matrixmaterial des 0°-Tapes zu mindestens 50 Gew.-% aus Polycarbonat besteht,
und wobei
das 0°-Tape eine Dicke von 100 bis 350 µm hat.

Dabei dreht erfindungsgemäß bevorzugt die Handlingeinrichtung (B) die Bahnteilstücke in der neuen bzw. unveränderten Vorschubrichtung so, dass nach der Drehung die Bereiche, die im 0°-Tape innerhalb desselben gelegen haben, nun parallel zur Laufrichtung des jeweiligen x°-Tapes liegen, während die die Seiten, die beim 0°-Tape Bereiche der zueinander parallelen Außenseiten waren, nun im mit dem Betrag des Winkels x zur Laufrichtung des jeweiligen x°-Tapes ausgerichtet sind.

Wie bereits dargestellt, ist also zu beachten, dass die Handlingeinrichtung (B) die Bahnteilstücke in der neuen bzw. unveränderten Vorschubrichtung so um den Betrag des Winkels x dreht, dass nach der Drehung um den Winkel x die Bereiche, die im 0°-Tape innerhalb desselben gelegen haben, nun parallel zur Laufrichtung des jeweiligen x°-Tapes liegen, während die Seiten, die beim 0°-Tape Bereiche der zueinander parallelen Außenseiten waren, nun im mit dem Betrag des Winkels x zur Laufrichtung des jeweiligen x°-Tapes ausgerichtet sind.

Das erfindungsgemäße Verfahren wird auf der erfindungsgemäßen Vorrichtung durchgeführt.

Das Verfahren ermöglicht es, im Vergleich zu Verfahren, bei denen die Handlingeinrichtung (B) nur eine Verbindeeinrichtung (C) beliefert, die Herstellung von x°-Tapes aus von der Vorratsbahn abgeschnittenen und gelieferten Elemente zu beschleunigen. Insbesondere wird dies durch Verfahrensschritt (2) ermöglicht.

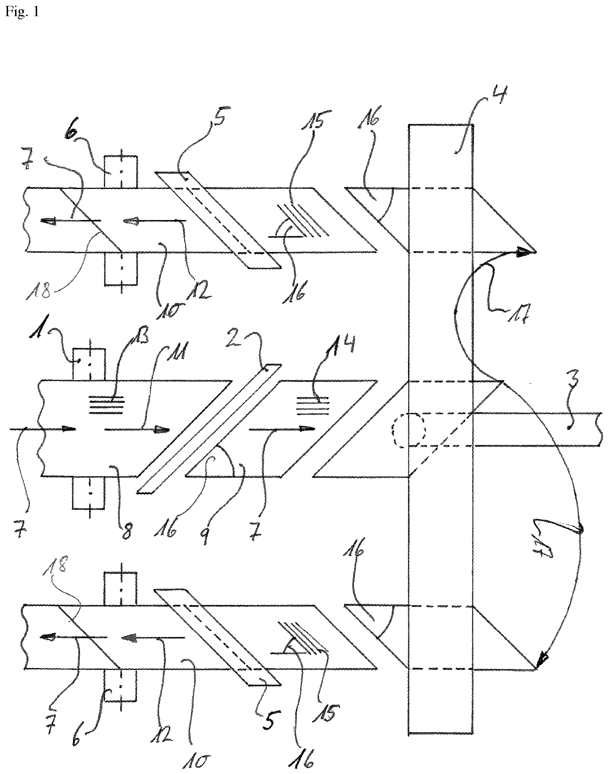

Fig. 1 zeigt in vereinfachter Form die erfindungsgemäße Vorrichtung in E-Anordnung, ohne dass die Erfindung eingeschränkt werden soll.

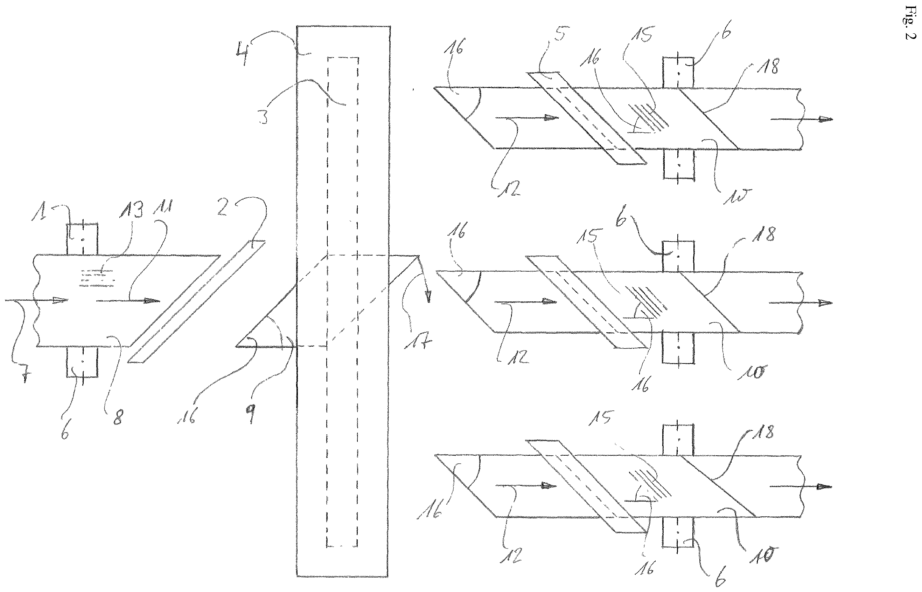

Fig. 2 zeigt in vereinfachter Form die erfindungsgemäße Vorrichtung in Psi-Anordnung, ohne dass die Erfindung eingeschränkt werden soll.

Dabei sind:
1 Zuführeinrichtung (F)
2 Schneideinrichtung (A)
3 Handlingeinrichtung (B)
4 Traverse (K)
5 Verbindeeinrichtungen (C)
6 Abzugseinrichtungen (G)
7 Vorschubrichtung
8 0°-Tape
9 Bahnteilstück
10 x°-Tape
11 Laufrichtung des 0°-Tapes
12 Laufrichtung der x°-Tapes
13 Ausrichtung der Fasern im 0°-Tape
14 Ausrichtung der Fasern im Bahnteilstück
15 Ausrichtung der Fasern im x°-Tape
16 Winkel x
17 Richtung(en), in der ein Bahnteilstück von der Handlingeinrichtung gedreht wird
18 Verbindungsnaht

## Patentansprüche

1. Vorrichtung zur semi-kontinuierlichen Herstellung eines x°-Tapes aus einem 0°-Tape, wobei das Matrixmaterial des 0°-Tapes zu mindestens 50 Gew.-% aus Polycarbonat besteht, und wobei das 0°-Tape eine Dicke von 100 bis 350 µm hat, und wobei das x°-Tape eine Halbzeugbahn aufgebaut aus unidirektional endlosfaserverstärkten Bahnteilstücken ist, wobei die Fasern in dieser Halbzeugbahn in einem Winkel x mit einem Betrag ungleich 0° bis einschließlich 90° zur Laufrichtung des x°-Tapes ausgerichtet sind, umfassend folgende Hauptkomponenten:
(A) eine Schneideinrichtung;
(B) eine Handlingeinrichtung;
(C₁; C₂; ... Cₙ) mindestens zwei Verbindeeinrichtungen.
wobei die Schneideinrichtung (A) der Handlingeinrichtung (B) vorgeschaltet ist, die Handlingeinrichtung den mindestens zwei Verbindeeinrichtungen (C₁; C₂; ... Cₙ) vorgeschaltet und zum abwechselnden Verteilen der Bahnteilstücke auf die mindestens zwei Verbindereinrichtungen (C₁; C₂; ... Cₙ) geeignet ist und die mindestens zwei Verbindeeinrichtungen (C₁; C₂; ... Cₙ) parallel zueinander geschaltet sind,
und wobei
der Schneideinrichtung (A) genau zwei oder genau drei Verbindungseinrichtungen (C) zugeordnet sind.

2. Vorrichtung nach Anspruch 1, **dadurch gekennzeichnet, dass** der Schneideinrichtung (A) eine Zuführeinrichtung (F), eine erste Speichereinheit (E) und eine Abwickeleinrichtung (D) vorgeschaltet sind und den mindestens zwei Verbindeeinrichtungen (C₁; C₂; ... Cₙ) jeweils eine Abzugseinrichtung (G), eine zweite Speichereinheit (H) und eine Aufwickeleinrichtung (J) nachgeschaltet sind.

3. Vorrichtung nach Anspruch 1 oder 2, **dadurch gekennzeichnet, dass** sich in Vorschubrichtung die Reihenfolge Abwickeleinrichtung (D) - Speichereinheit (E) - Zuführeinrichtung (F) - Schneideinrichtung (A) - Handlingeinrichtung (B) - Verbindeeinrichtung (C₁) (bzw. Verbindeeinrichtung (C₂)) - Abzugseinrichtung (G₁) (bzw. Abzugseinrichtung (G₂)) - zweite Speichereinheit (H₁) (bzw. zweite Speichereinheit (H₂)) - Aufwickeleinrichtung (J₁) (bzw. Aufwickeleinrichtung (J₂)), oder Abwickeleinrichtung (D) - Speichereinheit (E) - Zuführeinrichtung (F) - Schneideinrichtung (A) - Handlingeinrichtung (B) - Verbindeeinrichtung (C₁) (bzw. Verbindeeinrichtung (C₂) bzw. Verbindeeinrichtung (C₃)) - Abzugseinrichtung (G₁) (bzw. Abzugseinrichtung (G₂) bzw. Abzugseinrichtung (G₃)) - zweite Speichereinheit (H₁) (bzw. zweite Speichereinheit (H₂) bzw. zweite Speichereinheit (H₃)) - Aufwickeleinrichtung (J₁) (bzw. Aufwickeleinrichtung (J₂) bzw. Aufwickeleinrichtung (J₃)) ergibt.

4. Vorrichtung nach einem der vorhergehenden Ansprüche, **dadurch gekennzeichnet, dass** die Handlingeinrichtung (B) dazu geeignet ist, die vom einem 0°-Tape abgeschnittenen Bahnteilstücke in der gleichen Ebene so hintereinander zu legen, dass bei den Bahnteilstücken die Seiten gegenüber liegen, die beim 0°-Tape Bereiche der zueinander parallelen Außenseiten waren.

5. Vorrichtung nach Anspruch 4, **dadurch gekennzeichnet, dass** die Handlingeinrichtung (B) als Robotergreifarm -oder -greifhand, Drehteller, und/oder drehbare Saugeinrichtung ausgestaltet ist.

6. Vorrichtung nach einem der vorhergehenden Ansprüche, **dadurch gekennzeichnet, dass** der Winkel x einen Betrag größer 0° und bis einschließlich 90° hat, bevorzugt der Winkel x einen Betrag von 30°, 33°, 45°, 60°, 75° oder 90°, besonders bevorzugt 90° hat.

7. Verfahren zur Herstellung von x°-Tapes, die Halbzeugbahnen aufgebaut aus unidirektional endlosfaserverstärkten Bahnteilstücken sind, wobei die Fasern in diesen Halbzeugbahnen in einem Winkel x mit einem Betrag ungleich 0° bis einschließlich 90° zur Laufrichtung des jeweiligen x°-Tapes ausgerichtet sind, umfassend folgende Verfahrensschritte:
(1) Schneiden des 0°-Tapes in Bahnteilstücke mit einer Schneideinrichtung (A);
(2) abwechselndes Verteilen der Bahnteilstücke auf die mindestens zwei Verbindereinrichtungen (C₁; C₂; ... Cₙ);
(3) stoffschlüssiges Verbinden der Bahnteilstücke zu x°-Tapes;
wobei
der Schneideinrichtung (A) so viele Verbindeeinrichtungen (C₁, C₂, ... Cₙ) zugeordnet sind, wie der Quotient der Ausführungsgeschwindigkeit des Schritts (3) dividiert durch die Ausführungsgeschwindigkeit des Schritts (1) ergibt
und wobei
das Matrixmaterial des 0°-Tapes zu mindestens 50 Gew.-% aus Polycarbonat besteht,
und wobei
das 0°-Tape eine Dicke von 100 bis 350 µm hat,
und wobei
das Verfahren auf einer Vorrichtung nach einem der Ansprüche 1 bis 6 ausgeführt wird.

8. Verfahren nach Anspruch 7, **dadurch gekennzeichnet, dass** die Handlingeinrichtung (B) die Bahnteilstücke in der neuen bzw. unveränderten Vorschubrichtung so dreht, dass nach der Drehung die Bereiche, die im 0°-Tape innerhalb desselben gelegen haben, nun parallel zur Laufrichtung des jeweiligen x°-Tapes liegen, während die Seiten, die beim 0°-Tape Bereiche der zueinander parallelen Außenseiten waren, nun im mit dem Betrag des Winkels x zur Laufrichtung des jeweiligen x°-Tapes ausgerichtet sind.

9. Verfahren nach Anspruch 7 oder 8, **dadurch gekennzeichnet, dass** vor dem Verfahrensschritt (1) der Verfahrensschritt
(0) Zuführen des 0°-Tapes
und nach dem Verfahrensschritt (3) der Verfahrensschritt
(4) Aufwickeln des x°-Tapes
ausgeführt wird.

## Claims

1. Apparatus for semicontinuous production of an x°-tape from a 0°-tape, wherein the matrix material of the 0°-tape consists to an extent of at least 50 wt% of polycarbonate and wherein the 0°-tape has a thickness of 100 to 350 µm and wherein the x°-tape is a semifinished sheeting constructed from unidirectionally endless-fibre-reinforced sheeting sections, wherein the fibres in this semifinished sheeting are aligned at an angle x having a magnitude from non-0° to 90° inclusive to the running direction of the x°-tape, comprising the following main components:
(A) a cutting device;
(B) a handling device;
(C₁; C₂; ... Cₙ) at least two joining devices, wherein the cutting device (A) is arranged upstream of the handling device (B), the handling device is arranged upstream of the at least two joining devices (C₁; C₂; ... Cₙ) and is suitable for alternatingly distributing the sheeting sections among the at least two joining devices (C₁; C₂; ... Cₙ) and the at least two joining devices (C₁; C₂; ... Cₙ) are arranged in parallel with one another,
and wherein
the cutting device (A) has precisely two or precisely three joining devices (C) assigned to it.

2. Apparatus according to Claim 1, **characterized in that** the cutting device (A) has a feeding device (F), a first storage unit (E) and an unwinding device (D) arranged upstream of it and the at least two joining devices (C₁; C₂; ... Cₙ) each have a take-off device (G), a second storage unit (H) and a winding-up device (J) arranged downstream of them.

3. Apparatus according to Claim 1 or 2, **characterized in that**, in the advancement direction, the sequence unwinding device (D) - storage unit (E) - feeding device (F) - cutting device (A) - handling device (B) - joining device (C₁) (/joining device (C₂) ) - take-off device (G₁) (/take-off device (G₂)) - second storage unit (H₁) (/second storage unit (H₂)) - winding-up device (J₁) (/winding-up device (J₂)) or unwinding device (D) - storage unit (E) - feeding device (F) - cutting device (A) - handling device (B) - joining device (C₁) (/joining device (C₂)/joining device (C₃)) - take-off device (G₁) (/take-off device (G₂)/take-off device (G₃)) - second storage unit (H₁) (/second storage unit (H₂)/second storage unit (H₃)) - winding-up device (J₁) (/winding-up device (J₂) /winding-up device (J₃)) results.

4. Apparatus according to any of the preceding claims, **characterized in that** the handling device (B) is suitable for laying the sheeting sections cut from a 0°-tape one behind the other in the same plane in such a way that in the sheeting sections the sides which in the 0°-tape were regions of the mutually parallel outsides are disposed opposite one another.

5. Apparatus according to Claim 4, **characterized in that** the handling device (B) is configured as a robot gripping arm or gripping hand, a turntable and/or a rotatable suction device.

6. Apparatus according to any of the preceding claims, **characterized in that** the angle x has a magnitude from greater than 0° to 90° inclusive, preferably the angle x has a magnitude of 30°, 33°, 45°, 60°, 75° or 90°, particularly preferably 90°.

7. Process for producing x°-tapes, which are semifinished sheetings constructed from unidirectionally endless-fibre-reinforced sheeting sections, wherein the fibres in these semifinished sheetings are aligned at an angle x having a magnitude from non-0° to 90° inclusive to the running direction of the respective x°-tape, comprising the following process steps:
(1) cutting the 0°-tape into sheeting sections with a cutting device (A);
(2) alternatingly distributing the sheeting sections among the at least two joining devices (C₁; C₂; ... Cₙ);
(3) cohesively joining the sheeting sections to afford x°-tapes;
wherein
the cutting device (A) has assigned to it a number of joining devices (C₁; C₂; ... Cₙ) equal to the quotient of the implementation speed of step (3) divided by the implementation speed of step (1)
and wherein
the matrix material of the 0°-tape consists to an extent of at least 50 wt% of polycarbonate
and wherein
the 0°-tape has a thickness of 100 to 350 µm and wherein
the process is performed on an apparatus according to any of Claims 1 to 6.

8. Process according to Claim 7, **characterized in that** the handling device (B) rotates the sheeting sections in the new or unchanged advancement direction in such a way that after the rotation the regions which in the 0°-tape were disposed within said tape are now disposed parallel to the running direction of the respective x°-tape while the sides which in the 0°-tape were regions of the mutually parallel outsides are now aligned at the magnitude of the angle x to the running direction of the respective x°-tape.

9. Process according to Claim 7 or 8, **characterized in that** before process step (1) process step
(0)feeding the 0°-tape
is performed and after process step (3) process step
(4)winding-up the x°-tape
is performed.

## Revendications

1. Dispositif pour la fabrication semi-continue d'un ruban x° à partir d'un ruban 0°, le matériau de matrice du ruban 0° étant constitué par au moins 50 % en poids de polycarbonate, et le ruban 0° ayant une épaisseur de 100 à 350 µm, et le ruban x° étant une bande de produit semi-fini formée à partir d'éléments de bande renforcés par des fibres continues unidirectionnelles, les fibres dans cette bande de produit semi-fini étant orientées à un angle x d'un montant différent de 0° jusqu'à 90° inclus par rapport à la direction de déplacement du ruban x°, comprenant les composants principaux suivants:
(A) un appareil de découpe ;
(B) un appareil de manipulation ;
(C₁ ; C₂ ; ... Cₙ) au moins deux appareils de liaison,
l'appareil de découpe (A) étant agencé en amont de l'appareil de manipulation (B), l'appareil de manipulation étant agencé en amont des au moins deux appareils de liaison (C₁ ; C₂ ; ... Cₙ) et étant approprié pour répartir par alternance les éléments de bande sur les au moins deux appareils de liaison (C₁ ; C₂ ; ... Cₙ), et les au moins deux appareils de liaison (C₁ ; C₂ ; ... Cₙ) étant agencés en parallèle l'un de l'autre,
et
exactement deux ou exactement trois appareils de liaison (C) étant associés à l'appareil de découpe (A) .

2. Dispositif selon la revendication 1, **caractérisé en ce qu'**un appareil d'alimentation (F), une première unité de stockage (E) et un appareil de déroulement (D) sont agencés en amont de l'appareil de découpe (A), et un appareil de soutirage (G), une deuxième unité de stockage (H) et un appareil d'enroulement (J) sont respectivement agencés en aval des au moins deux appareils de liaison (C₁ ; C₂ ; ... Cₙ).

3. Dispositif selon la revendication 1 ou 2, **caractérisé en ce que** la succession appareil de déroulement (D) - unité de stockage (E) - appareil d'alimentation (F) - appareil de découpe (A) - appareil de manipulation (B) - appareil de liaison (C₁) (ou appareil de liaison (C₂)) - appareil de soutirage (G₁) (ou appareil de soutirage (G₂)) - deuxième unité de stockage (H₁) (ou deuxième unité de stockage (H₂)) - appareil d'enroulement (J₁) (ou appareil d'enroulement (J₂)), ou appareil de déroulement (D) - unité de stockage (E) - appareil d'alimentation (F) - appareil de découpe (A) - appareil de manipulation (B) - appareil de liaison (C₁) (ou appareil de liaison (C₂) ou appareil de liaison (C₃)) - appareil de soutirage (G₁) (ou appareil de soutirage (G₂) ou appareil de soutirage (G₃)) - deuxième unité de stockage (H₁) (ou deuxième unité de stockage (H₂) ou deuxième unité de stockage (H₃)) - appareil d'enroulement (J₁) (ou appareil d'enroulement (J₂) ou appareil d'enroulement (J₃)) est obtenue dans la direction d'avancement.

4. Dispositif selon l'une quelconque des revendications précédentes, **caractérisé en ce que** l'appareil de manipulation (B) est approprié pour placer les éléments de bande découpés à partir d'un ruban 0° dans le même plan les uns après les autres de telle sorte que les côtés qui étaient des zones des côtés extérieurs parallèles les uns aux autres dans le ruban 0° soient disposés les uns en face des autres dans les éléments de bande.

5. Dispositif selon la revendication 4, **caractérisé en ce que** l'appareil de manipulation (B) est configuré sous la forme d'un bras de préhension ou d'une main de préhension robotique, d'un plateau tournant et/ou d'un appareil aspirant rotatif.

6. Dispositif selon l'une quelconque des revendications précédentes, **caractérisé en ce que** l'angle x a un montant supérieur à 0° et de jusqu'à 90° inclus, de préférence l'angle x a un montant de 30°, 33°, 45°, 60°, 75° ou 90°, de manière particulièrement préférée 90°.

7. Procédé de fabrication de rubans x°, qui sont des bandes de produit semi-fini formées à partir d'éléments de bande renforcés par des fibres continues unidirectionnelles, les fibres dans ces bandes de produit semi-fini étant orientées à un angle x d'un montant différent de 0° jusqu'à 90° inclus par rapport à la direction de déplacement du ruban x° respectif, comprenant les étapes de procédé suivantes :
(1) la découpe du ruban 0° en éléments de bande avec un appareil de découpe (A) ;
(2) la répartition par alternance des éléments de bande sur les au moins deux appareils de liaison (C₁; C₂;... Cₙ);
(3) la liaison par accouplement de matière des éléments de bande en rubans x° ;
le nombre d'appareils de liaison (C₁ ; C₂ ; ... Cₙ) associés à l'appareil de découpe (A) étant donné par le quotient de la vitesse de réalisation de l'étape (3) divisée par la vitesse de réalisation de l'étape (1) ,
et dans lequel
le matériau de matrice du ruban 0° étant constitué par au moins 50 % en poids de polycarbonate,
et
le ruban 0° ayant une épaisseur de 100 à 350 µm, et
le procédé étant réalisé sur un dispositif selon l'une quelconque des revendications 1 à 6.

8. Procédé selon la revendication 7, **caractérisé en ce que** l'appareil de manipulation (B) tourne les éléments de bande dans la direction d'avancement nouvelle ou inchangée de telle sorte qu'après la rotation, les zones qui se trouvaient dans le ruban 0° à l'intérieur de celui-ci soient maintenant parallèles à la direction de déplacement du ruban x° respectif, tandis que les côtés qui étaient dans le ruban 0° des zones des côtés extérieurs parallèles les uns aux autres, soient maintenant orientés selon le montant de l'angle x par rapport à la direction de déplacement du ruban x° respectif.

9. Procédé selon la revendication 7 ou 8, **caractérisé en ce qu'**avant l'étape de procédé (1), l'étape de procédé
(0) l'alimentation du ruban 0°
est réalisée et, après l'étape de procédé (3), l'étape de procédé
(4) l'enroulement du ruban x°
est réalisée.
